Europäisches Patentamt

European Patent Office

Office européen des brevets

(19)

(11) EP 0 708 309 A1

(12) DEMANDE DE BREVET EUROPEEN

(43) Date de publication:
24.04.1996  Bulletin 1996/17

(51) Int Cl.6: G01B 17/04

(21) Numéro de dépôt: 95402303.2

(22) Date de dépôt: 16.10.1995

(84) Etats contractants désignés:
DE DK FR GB IT NL

(30) Priorité: 17.10.1994  FR 9412352

(71) Demandeur: ALCATEL FIBRES OPTIQUES
F-95871 Bezons Cedex (FR)

(72) Inventeurs:
• Darbon, Philippe
F-95230 Soisy S/Montmorency (FR)

• Floch, Bernard
F-60240 Chaumont en Vexin (FR)
• Matau, Max
F-92390 Villeneuve la Garenne (FR)

(74) Mandataire:
Pothet, Jean Rémy Emile Ludovic et al
c/o SOSPI
14-16 rue de la Baume
F-75008 Paris (FR)

(54) Procédé de détection du centrage d'au moins une filière autour d'un fil tendu entre deux points

(57)     La présente invention concerne un procédé de détection du centrage d'au moins une filière (3, 4) autour d'un fil (2) tendu entre deux points fixes (6, 7) séparés d'une distance L, **caractérisé par le fait que :**

- l'on excite le fil (2) en vibration,

- l'on mesure sa fréquence F de vibration,

- l'on en déduit une longueur $\ell$ correspondante de corde qui vibre entre l'un (7) desdits points fixes, dit de référence, et un autre point, dit de contact,

- l'on compare cette longueur $\ell$ avec la longueur L et avec la longueur ($\ell_1$ ; $\ell_1+\ell_2$) du tronçon de fil séparant ledit point fixe de référence (7) de ladite filière (3, 4) pour en déduire :

   - si la longueur $\ell$ correspond à la longueur ($\ell_1$ ; $\ell_1+\ell_2$) de ce tronçon, que le fil (2) touche ladite filière, ledit point de contact se trouvant alors au niveau de ladite filière (3, 4),

   - ou au contraire, si la longueur $\ell$ égale la longueur L séparant les deux dits points fixes (6, 7), que le fil (2) ne touche pas ladite filière (3, 4), celle-ci étant bien centrée, ledit point de contact étant alors confondu avec l'autre desdits points fixes (6).

**Description**

La présente invention concerne un procédé de détection du centrage d'au moins une filière autour d'un fil tendu entre deux points.

En particulier, l'invention s'applique à la fabrication d'une fibre optique sur une tour de fibrage. On sait que la fibre est produite à partir d'une préforme ou cône de fibrage que l'on chauffe. La fibre qui se forme passe successivement au travers de deux filières d'enduction de résine pour assurer une certaine résistance mécanique à la fibre. La fibre est ensuite enroulée sur un cabestan assurant une certaine tension à la fibre. L'ensemble est disposé verticalement.

Il est nécessaire que les deux filières soient parfaitement centrées sur la fibre pour une bonne enduction. Si une filière touche la fibre, l'enduction n'est pas parfaitement homogène en épaisseur tout autour de la fibre et son taux de rupture augmente.

Actuellement, pour assurer le centrage des filières, on utilise un laser, mais compte tenu de la dimension des filières, il se produit un phénomène de diffraction et la méthode n'est pas bonne. En effet, le diamètre d'un faisceau laser hélium-néon est de l'ordre de 0,8 mm, alors que la première filière a un diamètre de 0,24 mm et la seconde de 0,32 mm. Or pour éviter une diffraction, il faudrait que le diamètre du trou soit trois à quatre fois celui du diamètre du faisceau de lumière.

Une autre méthode employée découle tout simplement du savoir faire des opérateurs et entraîne souvent une non reproductibilité de l'alignement.

La présente invention a pour but de proposer un procédé permettant un bon centrage et ceci avec des moyens très simples.

L'invention a ainsi pour objet un procédé de détection du centrage d'au moins une filière autour d'un fil tendu entre deux points fixes séparés d'une distance L, **caractérisé par le fait que** :

- l'on excite le fil en vibration,
- l'on mesure sa fréquence F de vibration,
- l'on en déduit une longueur $\ell$ correspondante de corde qui vibre entre l'un desdits points fixes, dit de référence, et un autre point, dit de contact,
- l'on compare cette longueur $\ell$ avec la longueur L et avec la longueur du tronçon de fil séparant ledit point fixe de référence de ladite filière pour en déduire :
- si la longueur $\ell$ correspond à la longueur de ce tronçon, que le fil touche ladite filière, ledit point de contact se trouvant alors au niveau de ladite filière,
- ou au contraire, si la longueur $\ell$ égale la longueur L séparant les deux dits points fixes, que le fil ne touche pas ladite filière, celle-ci étant bien centrées, ledit point de contact étant alors confondu avec l'autre desdits points fixes.

Par ailleurs, lorsque l'on détecte le centrage d'au moins deux filières, la comparaison de la longueur $\ell$ avec les longueurs respectives des tronçons de fil séparant le point fixe de référence de chaque filière indique si le fil (2) touche l'une des filières (3, 4) et en outre laquelle.

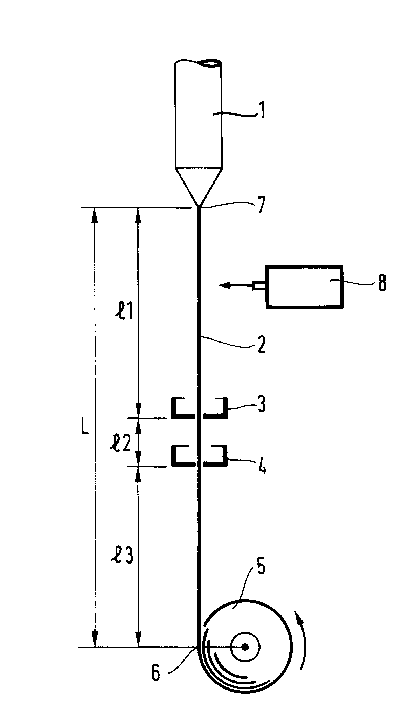

L'invention va maintenant être décrite en se référant au dessin annexé comportant une figure unique qui est un schéma très simplifié montrant la production d'une fibre optique et son enduction de résine.

Sur cette figure, on voit une préforme 1 ou cône de fibrage à partir de laquelle est produite une fibre optique 2. Les moyens de chauffage de la préforme, qui sont complètement étrangers à l'invention, n'ont pas été figurés. La fibre 2 passe dans deux filières d'enduction successives 3 et 4 pour aboutir à un cabestan d'enroulement et de traction 5. Les filières 3 et 4 sont des filières d'enduction de résine.

Pour que l'enduction soit uniforme en épaisseur tout autour de la fibre, il est nécessaire que les filières 3 et 4 soient parfaitement centrées sur la fibre 2 tendue entre la préforme 1 et le cabestan 5. En outre, si la fibre 2 touche l'une des filières, on observe un taux de rupture de la fibre plus important.

L'invention a donc pour but de proposer un procédé permettant de détecter et le centrage des filières 3 et 4 le long et autour de la fibre 2 tendue entre les points fixes 6 et 7 de façon à pouvoir agir ensuite sur le positionnement des filières en cas de mauvais centrage.

Ainsi, selon l'invention, le procédé consiste à exciter la fibre 2 en vibration par un moyen adapté et connu, par exemple par un souffle d'air.

Ensuite, au moyen d'une instrumentation figurée sur la figure par le symbole repéré 8, on mesure la fréquence des vibrations produites. Cette instrumentation est située entre la préforme 1 et la première filière d'enduction 3. Il s'agit par exemple d'un scanner associé à un analyseur de spectre par transformée de Fourier qui est un type de mesure connu.

Connaissant la fréquence F de vibration de la fibre 2, on en déduit facilement, par application de la formule permettant de connaître la fréquence de vibration d'une corde vibrante tendue entre deux points, la longueur $\ell$ de fibre vibrante 2 entre un point fixe de référence qui est un des points fixes 6 ou 7, par exemple le point 7, et un autre point dit point de contact, qui correspond à cette fréquence F.

Si cette longueur $\ell$ correspond à la longueur $\ell_1$ séparant le point 7 de la première filière 3, c'est que cette filière 3 n'est pas centrée, et qu'elle touche la fibre. Si la longueur $\ell$ est égale à $\ell_1 + \ell_2$, c'est que la seconde filière 4 touche la fibre. Enfin, si la longueur $\ell$ est égale à L, c'est que ni la filière 3, ni la filière 4 ne touche la fibre et qu'elles sont bien centrées sur celles-ci.

La formule donnant la fréquence de vibration F d'une corde vibrante entre deux points distants d'une longueur $\ell$ est la suivante :

$$F=\frac{1}{2\ell}\sqrt{\frac{s}{\mu}},$$

dans laquelle s est la tension appliquée à la corde et $\mu$ la masse linéique de la corde. Pour une fibre optique de densité 2,20 on a

$$F=\frac{1,2\times10^{-4}}{\ell d}\sqrt{s},$$

dans laquelle d est le diamètre de la corde en $\mu$m. On tire de là la longueur

$$\ell=\frac{1,2\times10^{-4}}{Fd}\sqrt{s}.$$

Connaissant la tension s appliquée à la fibre 1 ainsi que le diamètre de la fibre, et la fréquence de vibration F mesurée par l'instrumentation 8, on en déduit la longueur $\ell$. La comparaison de cette longueur avec les tronçons de longueur $\ell_1$ ; $\ell_1+\ell_2$ et L permet ainsi de déterminer, comme on l'a dit ci-dessus, si une filière touche la fibre, et laquelle, ou si, au contraire, elles sont bien centrées.

Le procédé est simple, efficace et économique et peut s'appliquer à tout matériau se présentant sous forme de fil tendu entre deux points.

## Revendications

1. Procédé de détection du centrage d'au moins une filière (3, 4) autour d'un fil (2) tendu entre deux points fixes (6, 7) séparés d'une distance L, **caractérisé par le fait que** :

   - l'on excite le fil (2) en vibration,
   - l'on mesure sa fréquence F de vibration,
   - l'on en déduit une longueur $\ell$ correspondante de corde qui vibre entre l'un (7) desdits points fixes, dit de référence, et un autre point, dit de contact,
   - l'on compare cette longueur $\ell$ avec la longueur L et avec la longueur ($\ell_1$ ; $\ell_1+\ell_2$) du tronçon de fil séparant ledit point fixe de référence (7) de ladite filière (3, 4) pour en déduire :

     - si la longueur $\ell$ correspond à la longueur ($\ell_1$ ; $\ell_1+\ell_2$) de ce tronçon, que le fil (2) touche ladite filière, ledit point de contact se trouvant alors au niveau de ladite filière (3, 4),
     - ou au contraire, si la longueur $\ell$ égale la longueur L séparant les deux dits points fixes (6, 7), que le fil (2) ne touche pas ladite filière (3, 4), celle-ci étant bien centrée, ledit point de contact étant alors confondu avec l'autre desdits points fixes (6).

2. Procédé selon la revendication 1 caractérisé en ce que, lorsque l'on détecte le centrage d'au moins deux filières (3, 4), la comparaison de la longueur

$\ell$ avec les longueurs respectives des tronçons de fil séparant ledit point fixe de référence (7) de chacune desdites filières indique si le fil (2) touche l'une desdites filières (3, 4) et en outre laquelle.

EP 0 708 309 A1

Office européen
des brevets

**RAPPORT DE RECHERCHE EUROPEENNE**

Numero de la demande

EP 95 40 2303

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP-A-0 479 120 (CORNING INC) 8 Avril 1992<br>* abrégé *<br>* page 4, ligne 31 - ligne 37; figure 1 *<br>--- | 1 | G01B17/04 |
| A | JOURNAL OF LIGHTWAVE TECHNOLOGY, AUG. 1991, USA,<br>vol. 9, no. 8, ISSN 0733-8724,<br>pages 945-947,<br>ASKINS C G ET AL 'Noncontact measurement of optical fiber draw tension'<br>* page 946, colonne de gauche, ligne 28 - ligne 37 *<br>--- | 1 | |
| A | PATENT ABSTRACTS OF JAPAN<br>vol. 007 no. 077 (C-159) ,30 Mars 1983<br>& JP-A-58 009839 (NIPPON DENSHIN DENWA KOSHA;OTHERS: 01) 20 Janvier 1983,<br>* abrégé *<br>--- | 1 | |
| A | PATENT ABSTRACTS OF JAPAN<br>vol. 008 no. 102 (C-222) ,12 Mai 1984<br>& JP-A-59 018130 (NIPPON DENSHIN DENWA KOSHA) 30 Janvier 1984,<br>* abrégé *<br>----- | 1 | **DOMAINES TECHNIQUES RECHERCHES (Int.Cl.6)**<br><br>G01B<br>G01L<br>G01M |

Le présent rapport a été établi pour toutes les revendications

| Lieu de la recherche | Date d'achèvement de la recherche | Examinateur |
|---|---|---|
| LA HAYE | 6 Février 1996 | Hoekstra, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

5